# EUROPÄISCHE PATENTSCHRIFT

(11) **EP 3 684 583 B1**
(45) Veröffentlichungstag und Bekanntmachung des Hinweises auf die Patenterteilung: **11.05.2022**
(21) Anmeldenummer: 18769095.3
(22) Anmeldetag: 04.09.2018
(51) Int. Cl.: B29C 45/17, B60H 1/00, B29L 31/30

(54) **VERFAHREN UND VORRICHTUNG ZUM HERSTELLEN EINES VERKLEIDUNGSTEILS**
METHOD AND DEVICE FOR PRODUCING A TRIM ELEMENT
PROCÉDÉ ET DISPOSITIF DE FABRICATION D'UNE PIÈCE DE GARNITURE

(30) Priorität: 18.09.2017 DE 102017216495
(43) Veröffentlichungstag der Anmeldung: 29.07.2020
(73) Patentinhaber: Volkswagen Aktiengesellschaft, 38440 Wolfsburg (DE)
(72) Erfinder: OSTWALD, Stefan, 31185 Söhlde (Hoheneggewen) (DE)
(86) Internationale Anmeldenummer: PCT/EP2018/073658
(87) Internationale Veröffentlichungsnummer: WO 2019/052846

(56) Entgegenhaltungen:
- DE-C1- 4 334 012
- DE-C1- 4 334 012
- DE-T2- 69 813 674
- US-A- 5 728 410
- US-A- 5 728 410

## Beschreibung

Die Erfindung betrifft ein Verfahren zum Herstellen eines Verkleidungsteils, insbesondere einer Instrumententafel, eines Kraftfahrzeugs, das zumindest einen einstückig mit dem Verkleidungsteil ausgebildeten Kanal aufweist, wobei in eine Kammer eines mehrteiligen Werkzeugs das Material des Verkleidungsteils im fließfähigen Zustand eingebracht und ein von dem Material verschiedenes Druckfluid in das Material vor seinem Aushärten eingebracht wird, um den Kanal auszubilden.

Weiterhin betrifft die Erfindung eine Vorrichtung zum Herstellen eines Verkleidungsteils, insbesondere zur Durchführung des oben genannten Verfahrens, mit einem mehrteiligen Werkzeug, das eine Kammer bildet, mit einer Einrichtung zum Einbringen des noch fließfähigen Materials des Verkleidungsteils in die Kammer und mit einem Injektionssystem zum Einbringen eines von dem Material des Verkleidungsteils verschiedenen Druckfluids in die Kammer zur Erzeugung eines Hohlraums in dem Verkleidungsteil.

Verfahren und Vorrichtungen der eingangs genannten Art sind aus dem Stand der Technik bekannt. So offenbart beispielsweise die Offenlegungsschrift DE 296 03 857 A1 ein Spritzgießformteil aus einem thermoplastischen Kunststoff, das zumindest einen integrierten Hohlraum aufweist, welcher bei der Produktion des Formteils durch die Injektion von Druckfluid in das noch nicht ausgehärtete Material hergestellt wird. Das das Verkleidungsteil bildende Material wird in eine Kammer eines mehrteiligen Werkzeugs eingegossen und durch das Injizieren des Druckfluids in dem Material ein Hohlraum ausgebildet. Nach dem Aushärten des Materials werden die Teile des Werkzeugs auseinander bewegt beziehungsweise voneinander weg bewegt, um das fertige Verkleidungsteil aus der Kammer lösen zu können.

Aus der Patentschrift DE 28 13 909 C2 ist außerdem bereits eine Instrumententafel für ein Kraftfahrzeug bekannt, die einen sich quer über die Fahrzeugbreite erstreckenden Hohlraum aufweist, der den Kanal einer Belüftungs- oder Klimatisierungsanlage des Kraftfahrzeugs bildet. Der Hohlraum wird dadurch hergestellt, dass an der Rückseite der Instrumententafel eine Abschlussplatte angeordnet wird, die zwischen der Rückseite der Instrumententafel und der Trennwand den Kanal ausbildet.

Auch aus der Offenlegungsschrift DE 2 259 652 A1 ist bereits eine Instrumententafel mit einem integrierten Luftverteilersystem bekannt, das einen einstückig an die Instrumententafel angeformten, insbesondere U-förmigen, Luftkanal aufweist. Auch hier wird somit der Luftkanal aus dem angeformten Bauteil und der Instrumententafel selbst in seinem Querschnitt begrenzt. Aus der Offenlegungsschrift DE 43 34 012 C1 ist ein Deckel aus Kunststoff bekannt, der eine Platte und wenigstens einen an deren Unterseite einstückig angeformten Steg umfasst. Der Steg des durch Spritzgießen gemäß dem Gasinnendruckverfahren hergestellten Deckels weist einen Hohlraum auf. Dabei ist vorgesehen, dass bei dem Spritzgießen ein bewegbarer Einsatz des Werkzeugs zur Vergrößerung des Volumens der Werkezugkavität zurückgezogen wird.

Ein ähnliches Verfahren ist für die Herstellung eines Verkleidungsteils aus der Offenbarungsschrift DE 698 13 674 T2 bekannt.

Der Erfindung liegt die Aufgabe zugrunde, ein Verfahren und eine Vorrichtung zu schaffen, die in vorteilhafter Weise, kostengünstig und präzise in wenigen Arbeitsschritten den Kanal in dem Verkleidungsteil bei der Herstellung ausbilden.

Die der Erfindung zugrunde liegende Aufgabe wird durch ein Verfahren mit den Merkmalen des Anspruchs 1 gelöst. Dies hat den Vorteil, dass der Materialaufwand bei der Herstellung des Bauteils minimiert wird, und dass der Kanal besonders präzise an dem Verkleidungsteil ausgebildet wird. Dies wird erfindungsgemäß dadurch erreicht, dass zumindest ein dem Kanal zugeordneter Teil des Werkzeugs während des Einbringens des Druckfluids zum Vergrößern des Volumens der Kammer zurückgezogen wird. Die Erfindung sieht also vor, dass das die Kammer definierende Werkzeug noch bevor das Material des Verkleidungsteils ausgehärtet ist, nämlich während das Druckfluid in das Material injiziert wird, teilweise derart bewegt wird, dass das Volumen der Kammer vergrößert wird. Weil der dem Kanal zugeordnete Teil des Werkzeugs zurückgezogen wird, wird beim Injizieren des Druckfluids dem Druckfluid die Möglichkeit gegeben, sich schnell und voluminös in dem Material auszubreiten und dadurch in kurzer Zeit und ausfüllend den Kanal beziehungsweise den Hohlraum in dem Material zu bilden. Die verbleibende Wandstärke des Materials wird insbesondere durch Temperaturvorgaben sowie Zeit und weitere Parameter eingestellt. Dabei ist es außerdem möglich, durch unterschiedlich weites Zurückziehen des Teils des Werkzeugs unterschiedlich große Kanäle mit ein und dem gleichen Werkzeug herzustellen, sodass durch die Vorrichtung mehrere unterschiedliche Verkleidungsteile herstellbar sind, was den Kostennutzen des Verfahrens sowie des Werkzeugs erhöht.

Gemäß einer bevorzugten Weiterbildung der Erfindung ist vorgesehen, dass der Kanal über die gesamte oder nahezu über die gesamte Breite der Instrumententafel hergestellt wird. Dadurch ergibt sich ein über die gesamte Breite oder nahezu die gesamte Breite der Instrumententafel erstreckender Führungskanal, der insbesondere als Luftkanal eines Belüftungs- oder Klimatisierungssystems des Kraftfahrzeugs nutzbar ist. Darüber hinaus kann der Kanal der Instrumententafel auch eine versteifende Wirkung zufügen, durch welche die Instrumententafel besonders robust wird.

Weiterhin ist bevorzugt vorgesehen, dass erst nach dem Aushärten des Materials wenigstens eine Zugangsöffnung zu dem Kanal hergestellt wird. Damit während der Initiierung des Druckfluids sich dieses vorteilhaft in dem Material zur Ausbildung der Kammer ausdehnen kann, ist es vorteilhaft, wenn es nicht aus der Kammer beziehungsweise dem geschaffenen Hohlraum entweichen kann. Daher ist es bevorzugt vorgesehen, dass der Kanal während der Herstellung zunächst verschlossen bleibt, um einen hohen Druck durch das Druckfluid in dem Material erzeugen zu können. Erst nach dem Aushärten werden dann eine oder mehrere Zugangsöffnungen geschaffen, durch welche der Kanal dann aktiviert wird beziehungsweise zugänglich gemacht wird.

Weiterhin ist bevorzugt vorgesehen, dass als Zugangsöffnung wenigstens eine Einströmöffnung und wenigstens eine Ausströmöffnung hergestellt werden. Der Kanal wird somit als Strömungskanal gefertigt, der zumindest eine Einströmöffnung und zumindest eine Ausströmöffnung aufweist. Optional wird in dem Kanal außerdem eine Revisionsöffnung geschaffen. Die Ausströmöffnungen sind besonders bevorzugt derart geschaffen, dass sie zur Aufnahme eines Luftausströmers mit verstellbaren Luftleitlamellen ausgebildet sind, um eine einfache Integration des Luftausströmers in die Instrumententafel zu erreichen.

Insbesondere ist vorgesehen, dass die jeweilige Öffnung in das Verkleidungsteil geschnitten oder gestanzt wird. Hierdurch ist ein einfaches Schaffen der jeweiligen Öffnung kostengünstig durchführbar.

Gemäß einer vorteilhaften Weiterbildung der Erfindung ist bevorzugt vorgesehen, dass in Abhängigkeit vom Verwendungszweck des Verkleidungsteils das lagerbare Teil des Werkzeugs unterschiedlich weit zurückgezogen wird. Hierdurch wird, wie zuvor bereits erwähnt, das Erzeugen unterschiedlich großer Kanäle beziehungsweise Hohlräume in dem Verkleidungsteil geschaffen. Es ergeben sich die oben bereits genannten Vorteile.

Erfindungsgemäß ist vorgesehen, dass in Längserstreckung des Kanals mehrere Teile des Werkzeugs zurückgezogen werden. Dadurch wird der Kanal durch das Zurückziehen mehrerer Werkzeugteile und das Injizieren des Druckfluids erzeugt. Dies hat den Vorteil, dass das Druckfluid gezielt entlang des Kanals verteilt werden kann, beispielsweise indem die benachbarten Teile des Werkzeugs nacheinander zurückgezogen werden. Hierdurch ist eine optimale Gestaltung des Kanals durch eine vorteilhafte Führung des Druckfluids gewährleistet. Insbesondere ist vorgesehen, dass zumindest zwei benachbarte Teile der Form unterschiedlich weit zurückgezogen werden. Dadurch wird erreicht, dass der Kanal entlang seiner Längserstreckung beispielsweise unterschiedlich große Querschnitte aufweist, wodurch das Strömungsverhalten der Luft in dem Kanal, wenn dieser in der Funktion eines Luftkanals ausgebildet ist, optimierbar ist. Auch ist dadurch gewährleistet, dass die Instrumententafel beziehungsweise der Kanal an geometrische Randbedingungen anpassbar sind beziehungsweise angepasst werden.

Die erfindungsgemäße Vorrichtung mit den Merkmalen des Anspruchs 8 zeichnet sich dadurch aus, dass zumindest ein Teil des Werkzeugs dazu ausgebildet ist, während des Einbringens des Druckfluids zum Vergrößern des Volumens der Kammer zurückgezogen zu werden. Es ergeben sich hierdurch die bereits genannten Vorteile. Zweckmäßigerweise ist dann dem Teil ein Aktuator zugeordnet, der das Teil beim Einbringen des Druckfluids zurückzieht.

Insbesondere ist vorgesehen, dass sich das zumindest eine Teil über die gesamte Breite oder nahezu über die gesamte Breite der Kammer erstreckt, sodass ein Kanal erzeugt wird, der sich über die gesamte Breite oder nahezu über die gesamte Breite der Instrumententafel beziehungsweise des Verkleidungsteils erstreckt. Auch hierdurch ergeben sich die zuvor bereits genannten Vorteile. Insbesondere ist vorgesehen, dass in Längserstreckung des Kanals gesehen, mehrere Teile des Werkzeugs zurückziehbar ausgebildet sind, um eine vorteilhafte Herstellung des Kanals zu erreichen, wobei bevorzugt jedem der Teile ein eigener Aktuator zugeordnet ist.

Weitere Vorteile und bevorzugte Merkmale und Merkmalskombinationen ergeben sich insbesondere aus dem zuvor Beschriebenen sowie aus den Ansprüchen.

Im Folgenden soll die Erfindung anhand der Zeichnung näher erläutert werden. Dazu zeigen
- Figur 1: ein vorteilhaftes Verkleidungsteil mit einem integrierten Luftkanal in einer perspektivischen Darstellung,
- Figuren 2A und 2B: ein Verfahren zum Herstellen des Verkleidungsteils in mehreren Schritten und
- Figuren 3A bis 3C: unterschiedliche Ausführungsbeispiele des Verkleidungsteils, jeweils in einer Querschnittsdarstellung.

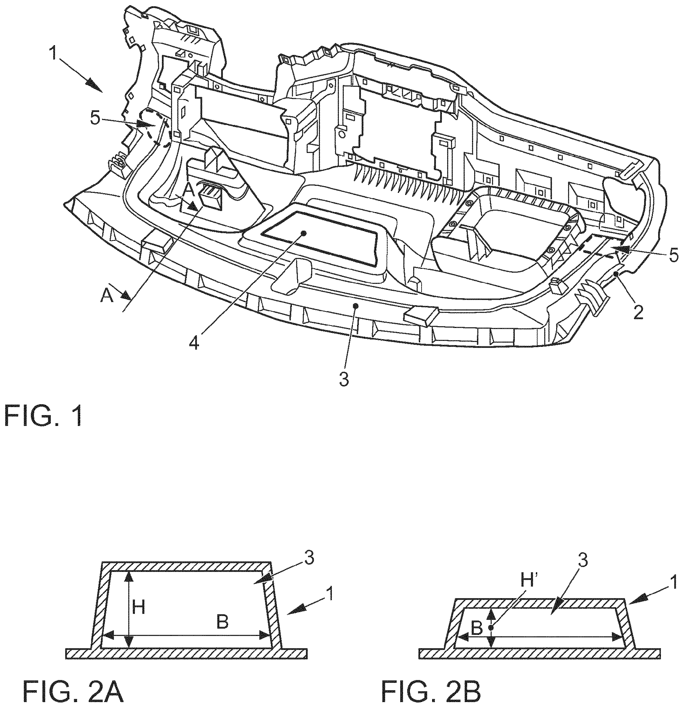

Figur 1 zeigt in einer perspektivischen Darstellung ein vorteilhaftes Verkleidungsteil 1, das eine Seitenwand 2 aufweist, an welcher ein Luftkanal 3 ausgebildet ist. Der Luftkanal 3 ist dabei einstückig mit der Seitenwand 2 ausgebildet und erstreckt sich U-förmig über die gesamte Breite des Verkleidungsteils 1 beziehungsweise der Seitenwand 2. Der Luftkanal 3 weist außerdem eine Einlassöffnung 4 sowie mehrere auf der Rückseite befindliche und daher hier nur gestrichelt gezeigte Ausströmöffnungen 5 auf.

Figuren 2A und 2B zeigen einen Querschnitt durch das Verkleidungsteil 1 entlang der Linie A-A in Figur 1, gemäß unterschiedlicher Ausführungsbeispiele. Gemäß Figur 2A ist vorgesehen, dass der Luftkanal 3 eine maximale Breite B sowie eine Höhe H aufweist. Gemäß dem Ausführungsbeispiel von Figur 2B ist vorgesehen, dass der Luftkanal 3 die gleiche maximale Breite B, jedoch eine kleinere Höhe H' aufweist. Damit ist das Volumen des Luftkanals 3 gemäß dem Ausführungsbeispiel von Figur 2B deutlich kleiner als das des Luftkanals 3 in dem Ausführungsbeispiel von Figur 2A. Das Verkleidungsteil 1 kann mit beiden Versionen des Luftkanals 3 hergestellt werden. Auch ist es denkbar, dass der Luftkanal 3 sich über seine Längserstreckung gesehen beide in Figuren 2A und 2B gezeigte Querschnitte aufweist.

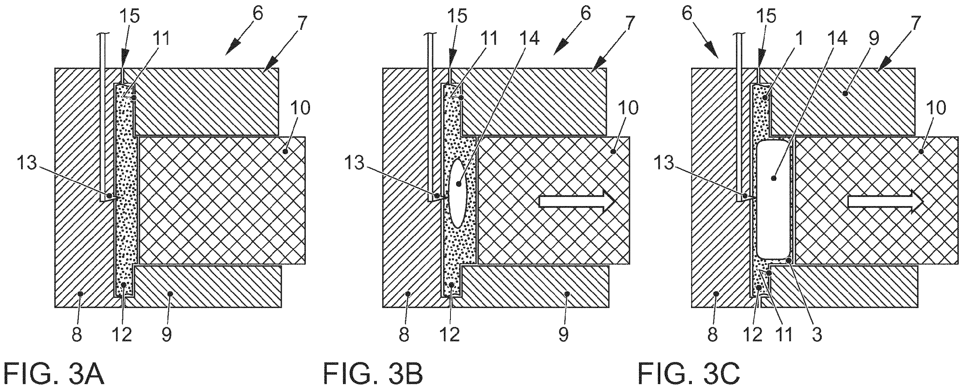

Mit Bezug auf Figuren 3A bis 3C soll im Folgenden eine Vorrichtung und ein Verfahren erläutert werden, mittels welcher der Luftkanal 3 in vorteilhafter Weise herstellbar ist.

Figur 3A zeigt dazu in einer Schnittdarstellung eine Vorrichtung 6 zur Herstellung des Verkleidungsteils 1. Die Vorrichtung 6 weist ein mehrteiliges Werkzeug 7 auf, wobei vorliegend drei Teile 8, 9 und 10 vorhanden sind, die gemeinsam eine Kammer 11 im Inneren des Werkzeugs 7 definieren. Dabei sind die Teile 8, 9 und 10 derart ausgebildet, dass das Teil 8 zumindest im Wesentlichen eine erste Hälfte des Werkzeugs 7 und der Kammer 11 definiert, während die Werkzeugteile 9 und 10 eine zweite Hälfte des Werkzeugs 7 bilden. Die Teile 8, 9 und 10 sind dabei relativ zueinander bewegbar, wobei die Teile 8 und 9 aufeinander zu und voneinander weg bewegbar sind, und das Teil 10 in dem Teil 9 geführt verschiebbar gelagert ist. Das Teil 10 ist dabei derart klein ausgebildet, dass es in etwa die Breite des Luftkanals 3 aufweist. Im geschlossenen Zustand, wie in Figur 3A gezeigt, liegen die Teile 8 und 9 aneinander an und das Teil 10 ist in das Teil 9 eingeschoben, sodass ein minimales Volumen der Kammer 11 eingestellt ist.

In einem ersten Schritt wird nun das noch flüssige Material 12 des Verkleidungsteils 1, insbesondere ein thermoplastischer Kunststoff, mittels einer Einrichtung 15 in die Kammer 11 eingebracht, wie in Figur 3A gezeigt.

In einem darauffolgenden Schritt wird durch ein Injektionssystem 13, das in die Kammer 11 hineinragt, ein insbesondere gasförmiges Druckfluid 14 in die Kammer 11, insbesondere in das in der Kammer 11 befindliche Material 12, eingebracht, sodass sich in dem Material 12 ein Raum mit dem Druckfluid 14 ausbildet, der einen Hohlraum des Materials 11 darstellt. Gleichzeitig oder zeitlich verzögert wird das Teil 10 zurückgezogen, wie durch einen Pfeil in Figur 3B gezeigt, sodass sich das Volumen der Kammer 11 im Bereich des Teils 10 vergrößert. Dadurch wird es dem Druckfluid 14 ermöglicht, sich schnell und voluminös auszubreiten und das Material 12 in der Kammer 11 derart zu verteilen, dass es auch weiterhin an dem Teil 10, das auch weiterhin die Kammer 11 begrenzt, anliegt.

Das Teil 10 wird so lange zurückgezogen oder so weit zurückgezogen und das Druckfluid 14 so lange in die Kammer 11 eingebracht, bis der gewünschte Luftkanal 3 in dem Material 12 ausgebildet ist, wie in Figur 3C gezeigt. In Abhängigkeit davon, wie weit das Teil 10 zurückgezogen und das Druckfluid in die Kammer 11 eingebracht wird, wird der Querschnitt des Luftkanals 3 variiert.

So kann auf einfache Art und Weise durch unterschiedlich weites Zurückziehen des Teils 10 sowohl der Luftkanal gemäß dem Ausführungsbeispiel von Figur 2A als auch der Luftkanal gemäß dem Ausführungsbeispiel von Figur 2B mit dem gleichen Werkzeug 7 hergestellt werden. Hierdurch ergibt sich eine vielfältige Verwendungsmöglichkeit des Werkzeugs 7 für die Herstellung unterschiedlicher Verkleidungsteile 1. Nach dem Aushärten des Materials 12, wie in Figur 3C gezeigt, werden die Teile 8, 9 und 10 derart voneinander entfernt, dass das fertige Verkleidungsteil 1 einfach aus der dann geöffneten Kammer 11 entnehmbar ist.

Insgesamt werden somit ein Verfahren und eine Vorrichtung 6 geboten, die auf einfache Art und Weise die Integration eines Luftkanals 3 in ein Verkleidungsteil 1 erlauben, wobei mittels der gleichen Vorrichtung 6 unterschiedliche Luftkanäle 3, insbesondere Luftkanäle 3 mit unterschiedlich großen Durchströmungsquerschnitten hergestellt werden können.

Gemäß einem vorteilhaften Ausführungsbeispiel ist vorgesehen, dass mehrere der Teile 10 in Längserstreckung der Kammer 11 nebeneinanderliegend angeordnet sind, sodass diese separat voneinander zurückgezogen werden, um den Luftkanal 3 auszubilden. Dazu ist insbesondere vorgesehen, dass zuerst das am nächsten zu der Injektionssystem 13 liegende Teil 10 zurückgezogen wird, und anschließend das dazu benachbarte Teil 10. Hierdurch wird nach und nach der Hohlraum durch das Druckfluid in dem Material 12 gezielt geschaffen. Alternativ werden die Teile 10 gleichzeitig zurückgezogen. Auch ist es denkbar, dass die Teile 10 unterschiedlich weit zurückgezogen werden, um dem Luftkanal 3 in seiner Längserstreckung unterschiedliche Strömungsquerschnitte zu verleihen. So ist es beispielsweise vorgesehen, dass der Luftkanal 3 gemäß dem Ausführungsbeispiel von Figur 3 in seinem mittleren Abschnitt, also nahe zur Einströmöffnung 4, den Durchströmungsquerschnitt gemäß Figur 2A aufweist, und im Bereich der Ausströmöffnungen 5, einen Querschnitt, wie er in Figur 2B gezeigt ist. Alternativ ist nur ein Teil 10 vorgesehen, das sich über die gesamte Breite oder nahezu die gesamte Breite der Kammer 11 erstreckt, um den Luftkanal 3 auszubilden.

Nach dem Entnehmen des Verkleidungsteils 1 aus dem Werkzeug 7 werden die Zugangsöffnungen 4, 5 zu dem Luftkanal 3 beispielsweise durch Schneiden und/oder Stanzen geschaffen, sodass nunmehr ein Luftstrom durch den Luftkanal 3 strömen kann und das Verkleidungsteil 1 einsatzbereit ist.

### Bezugszeichenliste

- 1: Verkleidungsteil
- 2: Seitenwand
- 3: Luftkanal
- 4: Zugangsöffnung
- 5: Zugangsöffnung
- 6: Vorrichtung
- 7: Werkzeug
- 8: Teil
- 9: Teil
- 10: Teil
- 11: Kammer
- 12: Material
- 13: Injektionssystem
- 14: Druckfluid
- 15: Einrichtung

## Patentansprüche

1. Verfahren zum Herstellen eines Verkleidungsteils (1), insbesondere einer Instrumententafel, eines Kraftfahrzeugs, das zumindest einen einstückig mit dem Verkleidungsteil (1) ausgebildeten Luftkanal (3) aufweist, wobei in eine Kammer (11) eines mehrteiligen Werkzeugs (7) das Material (12) des Verkleidungsteils (1) im fließfähigen Zustand eingebracht und ein von dem Material (12) verschiedenes Druckfluid in das Material (12) vor dem Aushärten des Materials (12) eingebracht wird, um den Luftkanal (3) auszubilden, wobei zumindest ein dem Luftkanal (3) zugeordneter Teil (10) des Werkzeugs (7) während des Einbringens des Druckfluids (14) zum Vergrößern des Volumens der Kammer (11) zurückgezogen wird, **dadurch gekennzeichnet, dass** in Längserstreckung des Kanals mehrere Teile (10) des Werkzeugs (7) zurückgezogen werden.

2. Verfahren nach dem vorhergehenden Anspruch, **dadurch gekennzeichnet, dass** der Luftkanal (3) über die gesamte oder nahezu die gesamte Breite des Verkleidungsteils (1) hergestellt wird.

3. Verfahren nach einem der vorhergehenden Ansprüche, **dadurch gekennzeichnet, dass** erst nach dem Aushärten des Materials (12) wenigstens eine Zugangsöffnung (4,5) zu dem Luftkanal (3) geschaffen wird.

4. Verfahren nach einem der vorhergehenden Ansprüche, **dadurch gekennzeichnet, dass** als Zugangsöffnung (4,5) wenigstens eine Einströmöffnung (4) und wenigstens eine Ausströmöffnung (5) hergestellt werden.

5. Verfahren nach einem der vorhergehenden Ansprüche, **dadurch gekennzeichnet, dass** die jeweilige Zugangsöffnung (4,5) in das Verkleidungsteil (1) geschnitten oder gestanzt wird.

6. Verfahren nach einem der vorhergehenden Ansprüche, **dadurch gekennzeichnet, dass** in Abhängigkeit vom Verwendungszweck des Verkleidungsteils (1) das Teil (10) des Werkzeugs (7) unterschiedlich weit zurückgezogen wird.

7. Verfahren nach einem der vorhergehenden Ansprüche, **dadurch gekennzeichnet, dass** zumindest zwei benachbarte Teile des Werkzeugs (7) unterschiedlich weit zurückgezogen werden.

8. Vorrichtung (6) zum Herstellen eines Verkleidungsteils (1), insbesondere zur Durchführung des Verfahrens nach einem der vorhergehenden Ansprüche, mit einem mehrteiligen Werkzeug (7), das eine Kammer (11) bildet, mit einer Einrichtung (15) zum Einbringen des noch fließfähigen Materials (12) des Verkleidungsteils (1) in die Kammer (11), und mit einem Injektionssystem (13) zum Einbringen eines insbesondere gasförmigen Druckfluids in die Kammer (11) zur Erzeugung eines Hohlraums in dem noch fließfähigen Material (12), wobei zumindest ein dem Luftkanal (3) zugeordneter Teil (10) des Werkzeugs (7) dazu ausgebildet ist, während das Druckfluid (14) eingebracht wird zum Vergrößern des Volumens der Kammer (11) zurückgezogen zu werden, **dadurch gekennzeichnet, dass** das Werkzeug (7) mehrere in Längserstreckung der Kammer (11) nebeneinander liegend angeordnete Teile (10) aufweist, die zurückziehbar sind.

9. Vorrichtung nach Anspruch 8, **dadurch gekennzeichnet, dass** sich das zumindest eine Teil (10) über die gesamte Breite oder nahezu die gesamte Breite der Kammer (11) erstreckt.

## Claims

1. Method for producing a trim part (1), in particular an instrument panel, of a motor vehicle, this having at least one air duct (3) which is formed in one piece with the trim part (1), wherein the material (12) of the trim part (1) is introduced in a flowable state into a chamber (11) of a multi-part tool (7) and a pressure fluid, which differs from the material (12), is introduced into the material (12) prior to the hardening of the material (12) for the purpose of forming the air duct (3), wherein, during the introduction of the pressure fluid (14), at least one part (10), assigned to the air duct (3), of the tool (7) is pulled back for the purpose of increasing the volume of the chamber (11), **characterized in that**, in the longitudinal extent of the duct, multiple parts (10) of the tool (7) are pulled back.

2. Method according to the preceding claim, **characterized in that** the air duct (3) is produced over the entire or almost the entire width of the trim part (1).

3. Method according to either of the preceding claims, **characterized in that** at least one access opening (4, 5) to the air duct (3) is created only after the material (12) has hardened.

4. Method according to one of the preceding claims, **characterized in that**, as access opening (4, 5), at least one inflow opening (4) and at least one outflow opening (5) are produced.

5. Method according to one of the preceding claims, **characterized in that** the respective access opening (4, 5) is cut or punched into the trim part (1).

6. Method according to one of the preceding claims, **characterized in that** the extent to which the part (10) of the tool (7) is pulled back differs according to the intended use of the trim part (1).

7. Method according to one of the preceding claims, **characterized in that** at least two adjacent parts of the tool (7) are pulled back to different extents.

8. Apparatus (6) for producing a trim part (1), in particular for carrying out the method according to one of the preceding claims, having a multi-part tool (7) which forms a chamber (11), having a device (15) for introducing the still flowable material (12) of the trim part (1) into the chamber (11), and having an injection system (13) for introducing an in particular gaseous pressure fluid into the chamber (11) for the purpose of producing a cavity in the still flowable material (12), wherein at least one part (10), assigned to the air duct (3), of the tool (7) is configured such that, while the pressure fluid (14) is being introduced, it is pulled back for the purpose of increasing the volume of the chamber (11), **characterized in that** the tool (7) has multiple parts (10) which are arranged situated one next to the other in the longitudinal extent of the chamber (11) and which can be pulled back.

9. Apparatus according to Claim 8, **characterized in that** the at least one part (10) extends over the entire width or almost the entire width of the chamber (11).

## Revendications

1. Procédé pour fabriquer une partie de garniture (1), notamment un tableau de bord, d'un véhicule automobile, qui présente au moins un canal d'air (3) formé d'un seul tenant avec la partie de garniture (1), le matériau (12) de la partie de garniture (1) étant introduit à l'état fluide dans une chambre (11) d'un outil en plusieurs parties (7) et un fluide sous pression, différent du matériau (12), étant introduit dans le matériau (12) avant le durcissement du matériau (12) afin de former le canal d'air (3), au moins une partie (10) de l'outil (7) associée au canal d'air (3) étant rétractée pendant l'introduction du fluide sous pression (14) pour agrandir le volume de la chambre (11), **caractérisé en ce que** plusieurs parties (10) de l'outil (7) sont rétractées dans l'extension longitudinale du canal.

2. Procédé selon la revendication précédente, **caractérisé en ce que** le canal d'air (3) est réalisé sur toute ou presque toute la largeur de la partie de garniture (1).

3. Procédé selon l'une quelconque des revendications précédentes, **caractérisé en ce qu'**au moins une ouverture d'accès (4, 5) au canal d'air (3) n'est créée qu'après le durcissement du matériau (12).

4. Procédé selon l'une quelconque des revendications précédentes, **caractérisé en ce qu'**au moins une ouverture d'entrée (4) et au moins une ouverture de sortie (5) sont réalisées en tant qu'ouverture d'accès (4, 5).

5. Procédé selon l'une quelconque des revendications précédentes, **caractérisé en ce que** l'ouverture d'accès respective (4, 5) est découpée ou estampée dans la partie de garniture (1).

6. Procédé selon l'une quelconque des revendications précédentes, **caractérisé en ce qu'**en fonction de l'utilisation prévue de la partie de garniture (1), la partie (10) de l'outil (7) est rétractée sur une distance différente.

7. Procédé selon l'une quelconque des revendications précédentes, **caractérisé en ce qu'**au moins deux parties voisines de l'outil (7) sont rétractées sur une distance différente.

8. Dispositif (6) pour fabriquer une partie de garniture (1), notamment pour mettre en œuvre le procédé selon l'une quelconque des revendications précédentes, comprenant un outil en plusieurs parties (7), qui forme une chambre (11), comprenant un appareil (15) pour introduire le matériau encore fluide (12) de la partie de garniture (1) dans la chambre (11), et comprenant un système d'injection (13) pour introduire un fluide sous pression, notamment gazeux, dans la chambre (11) pour générer une cavité dans le matériau encore fluide (12), au moins une partie (10) de l'outil (7) associée au canal d'air (3) étant configurée pour être rétractée pendant que le fluide sous pression (14) est introduit afin d'agrandir le volume de la chambre (11), **caractérisé en ce que** l'outil (7) présente plusieurs parties (10) agencées les unes à côté des autres dans l'extension longitudinale de la chambre (11), qui sont rétractables.

9. Dispositif selon la revendication 8, **caractérisé en ce que** l'au moins une partie (10) s'étend sur toute la largeur ou sur presque toute la largeur de la chambre (11).
